(19) Europäisches Patentamt
European Patent Office
Office européen des brevets

(11) **EP 2 159 945 B1**

(12) **EUROPEAN PATENT SPECIFICATION**

(45) Date of publication and mention
of the grant of the patent:
**12.02.2014 Bulletin 2014/07**

(51) Int Cl.:
***H04L 1/00*** (2006.01)    ***H04L 12/28*** (2006.01)

(21) Application number: **08305507.9**

(22) Date of filing: **29.08.2008**

(54) **Method for protecting traffic flows in a radio transmission system**

Verfahren zum Schutz von Datenströmen in einem Funkübertragungssystem

Procédé pour la protection des flux de trafic dans un système de transmission radio

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**03.03.2010 Bulletin 2010/09**

(73) Proprietor: **Alcatel Lucent
75007 Paris (FR)**

(72) Inventors:
• **Barzaghi, Giorgio
20069 Vaprio d'Adda (IT)**

• **Mirelli, Giacomo
20061 Carugate (IT)**
• **Frecassetti, Mario Giovanni Luigi
24128 Bergamo (IT)**

(74) Representative: **Shamsaei Far, Hassan et al
Alcatel-Lucent International
32, avenue Kléber
92700 Colombes (FR)**

(56) References cited:
**EP-A- 1 936 852        EP-A1- 1 389 848
US-A1- 2002 072 330    US-B1- 6 341 145**

## Description

## Technical Field

The present invention relates to the field of the radio transmission systems.
In particular, the present invention relates to a method for protecting traffic flows in a radio transmission system. The present invention further relates to a transmitting apparatus and a system configured for implementing said method.

## Background Art

As it is well known, a radio transmission system comprises a plurality of radio channels, each provided with a respective radio equipment for transmitting and receiving a traffic flow related to a particular service. An example of traffic flow is a Time Division Multiplexing (TMD) traffic flow, which is transported through the radio transmission system by using, for example, a Plesiochronous Digital Hierarchy (PDH) or a Synchronous Digital Hierarchy (SDH).

The traffic flow related to a particular service is carried over one radio channel. If the size of the radio channel allows, traffic flows related to different services may be carried over the same radio channel.

Typically, in these multi-channel transmission systems a traffic protection mechanism is implemented, i.e. a mechanism which guarantees the transmission of a traffic flow even when the radio channel transporting it undergoes a degradation or a failure.

Herein after, the term "degradation" will designate an event inducing the performance of a radio channel to decrease below a threshold indicative of the minimum acceptable performance. On the other hand, the term "failure" will designate an event inducing interruption of transmission across a radio channel.

A known type of traffic protection mechanism is the N+M mechanism.
According to this mechanism, the whole transmission bandwidth is divided into a number N of operative radio channels and a number M of protection  radio channels. Typical protection mechanisms are the N+1 protection mechanism, providing N operative radio channels and one protection radio channel, and the N+2 protection mechanism, providing N operative radio channels and two protection radio channels. In absence of degradations or failures, the traffic flows are transmitted by the N operative radio channels. In the event of degradation or failure of an operative radio channel, the traffic flow(s) transported by said radio channel is rerouted to the one of the protection radio channels. As a result, the M protection radio channels are used only in case of degradation or failure of one or more of the N operative radio channels.

The radio channels through which the traffic flows are transmitted can have a fixed modulation and coding. In this case, the type of modulation and coding is univocally chosen based on the characteristics of the radio channel to be achieved, such as for instance the bit rate and the immunity to noise due to atmospheric agents.

As an alternative to the fixed modulation, the so-called Adaptive Coding Modulation technique (ACM) can be used. According to the ACM, the modulation and coding of a radio signal are dynamically varied according to time changes of the conditions (e.g. loss of connection, level of cross-talking caused by signals generated by other transmitters, receiver sensitivity, etc.) of the radio channel used for transmitting the radio signal.

In particular, according to the ACM, the transmitter receives from the receiver a control signal indicating the conditions of the radio channel, and according to this control signal dynamically modifies the modulation and coding of the radio signal.

When the conditions of the radio channel are good (i.e. when the loss of connection is low, the level of cross-talking is low and the receiver sensitivity is high), modulation and coding types with high data transmission capacity can be used, e.g. 16-QAM (16-Quadrature Amplitude Modulation), 64-QAM (64-Quadrature Amplitude Modulation), or 256-QAM (256-Quadrature Amplitude Modulation). On the contrary, if, during transmission, the conditions of the radio channel get worse (e.g. the loss of connection increases), one  can try to maintain the radio channel performance above the minimum acceptable value by using a type of modulation and coding with a greater noise immunity. An example of this type of modulation and coding is the QPSK (Quadrature Phase Shift Keying), which has a lower transmission capacity and a greater value of the signal-to-noise ratio, if compared to the QAM above mentioned.

US 2002/0072330 discloses a device named "Multi-Channel Redundant Wireless Network Link" (RWNL) which comprises a plurality of wireless networking radio units, a processor unit, a radio control unit, and wired network units. Two RWNL devices communicating to each other form a multichannel redundant wireless network communication link. The RWNL devices aggrades the networking bandwidth of all its wireless networking units to become a big networking bandwidth. Network packets flow control means controls the networking packets transmitted between the wireless networking units and wired networking unit, the communication between the local wireless networking units to remote wireless networking units of the other RWNL. When the communication of one of the wireless networking channels failed to continue the communication, the flow control means will redistribute the packet flow among the remaining wireless networking radio units, shutdown the problem wireless networking channel, and report the networking status. Thus, as far as there is one wireless networking channel still functioning, the network link keeps communicating. The communication link is multiple redundancies.

## Summary of the invention

The inventors have perceived that, in order to flexibly and efficiently use the available resources of a multi-channel radio transmission system, the traffic flow(s) can be divided into a plurality of packets.

Each packet comprises a data portion (payload) and a header including additional information, such as for example information on source and destination, flags to designate the start and the end of the packet, information on the integrity of the payload, priority information, information on the type of payload, and the like.

In order to transmit the packets, a selection is made from available radio channels, thereby selecting one ore more radio channels which are considered to be suitable for incorporating a packet formed as described above. For selecting such a radio channel, in addition to the requirement of the availability, the size of a specific radio channel with respect to the amount and the size of the packets to be transmitted is also taken into account.

The packets may be transmitted through the radio channels in any convenient number. For example, all the packets originating from a single traffic flow may be transmitted through one single radio channel. Alternatively, some packets may be transmitted through one selected radio channel while others may be transmitted through another selected radio channel. Therefore, dividing the traffic flow in packets allows to make the transmission of a service independent from a specific radio channel.

The N+M protection mechanisms above described exhibit the drawback that the radio resources are not flexibly and efficiently used. This is because the M protection radio channels are used only if a failure or a degradation occurs.

This drawback is more and more severe in the above mentioned radio transmission systems wherein the traffic flow(s) are transported in form of packets. Indeed, the main advantage of these radio transmission systems Is a particularly efficient use of the radio resources. However, applying one of the above N+M protection mechanisms to these radio transmission systems disadvantageously does not allow to use some of the radio channels (i.e. the M protection radio channels) for transmitting packets. This disadvantageously remarkably decreases the efficiency of the radio resources usage.

Therefore, according to embodiments of the present invention there is provided a method for protecting traffic flows in a radio transmission system which overcomes the aforesaid drawbacks.

In particular, according to embodiments of the present invention there is provided a method for protecting traffic flows in a radio transmission system which allows to exploit the radio resources in a more efficient way than the above N+M known protection mechanisms.

According to a first aspect, the present invention provides a method for protecting a traffic flow in a radio transmission system having a number of radio channels, wherein it comprises the following steps:

a) dividing the traffic flow in a plurality of packets;
b) transmitting the plurality of packets on the number of radio channels;
c) detecting a performance worsening of at least one radio channel of the number of radio channels; and
d) transmitting at least part of the plurality of packets on remaining radio channels, the remaining radio channels corresponding to the number of radio channels except the at least one radio channel,

the method being characterized in that it comprises the further following steps:

c2) between step c) and step d), performing a switching from a first modulation and coding, the first modulation and coding corresponding to a first transmission capacity of the at least one radio channel, to a second modulation and coding on the at least one radio channel, the second modulation and coding corresponding to a second transmission capacity of the at least one radio channel and being such that a sum of capacities of traffic flows is lower than or equal to a total capacity of the radio transmission  system in case of worsening of the performance of the at least one radio channel of the number of radio channels; and
d2) during step d), transmitting at least one packet of the plurality of packets on the at least one radio channel by using the second modulation and coding.

The step c) may further comprise transmitting a control signal, indicating the worsening of the performance of the at least one radio channel, through the at least one radio channel which experienced the performance worsening.

According to a second aspect, the present invention provides a transmitting apparatus configured for protecting a traffic flow in a radio transmission system having a number of radio channels. The transmitting apparatus comprises a packetizer for dividing the traffic flow in a plurality of packets and a plurality of transmitters configured for transmitting the plurality of packets on the number of radio channels, wherein, in response to a performance worsening of at least one radio channel of the number of radio channels, the plurality of transmitters transmit at least part of the plurality of packets on remaining radio channels, the remaining radio channels corresponding to the number of radio channels except the at least one radio channel, the transmitting apparatus being characterized in that it further comprises a modulator/encoder and a modulation and coding selector which drives the modulator/encoder for switching modulation and coding of the at least one radio channel from a first modulation and coding corresponding to a first transmission capacity of the at least one radio channel, to a second modulation and coding corresponding to a second transmission capacity of the at least one radio channel so that a sum of capacities of traffic flows is lower than or equal to a total capacity of the radio transmission system In case of worsening of the performance of the at least one radio channel of the number of radio channels, and in that the plurality of transmitters is configured for transmitting at least one packet of the plurality of packets on the at least one radio channel by using the second modulation and coding.

The transmitting apparatus may be further configured for receiving a control signal, indicating the worsening of the performance of the at least one radio channel.

According to a third aspect, the present invention provides a radio transmission system comprising a transmitting apparatus as set forth above and a receiving apparatus cooperating with the transmitting apparatus.

## Brief description of the drawings

Embodiments of the present invention will be better understood by reading the following detailed description, given by way of example and not of limitation, to be read by referring to the accompanying drawings, wherein:

- Figure 1 schematically shows a multi-channel radio transmission system provided with a protection mechanism of the traffic flows according to a first embodiment of the present invention, in normal operative condition;
- Figure 2 shows in detail the structure of a transmitter-receiver arrangement suitable for implementing a protection mechanism of traffic flows according to a second embodiment of the present invention;
- Figure 3 schematically shows a multi-channel radio transmission system incorporating the transmitter-receiver arrangement of Figure 2, when a degradation occurs on one radio channel; and
- Figure 4 shows the multi-channel radio transmission system of Figure 3, when a degradation occurs on two radio channels.

Certain method steps of the embodiments of the present invention are represented in the figure by reference numerals in parenthesis.

## Detailed description of preferred embodiments of the invention

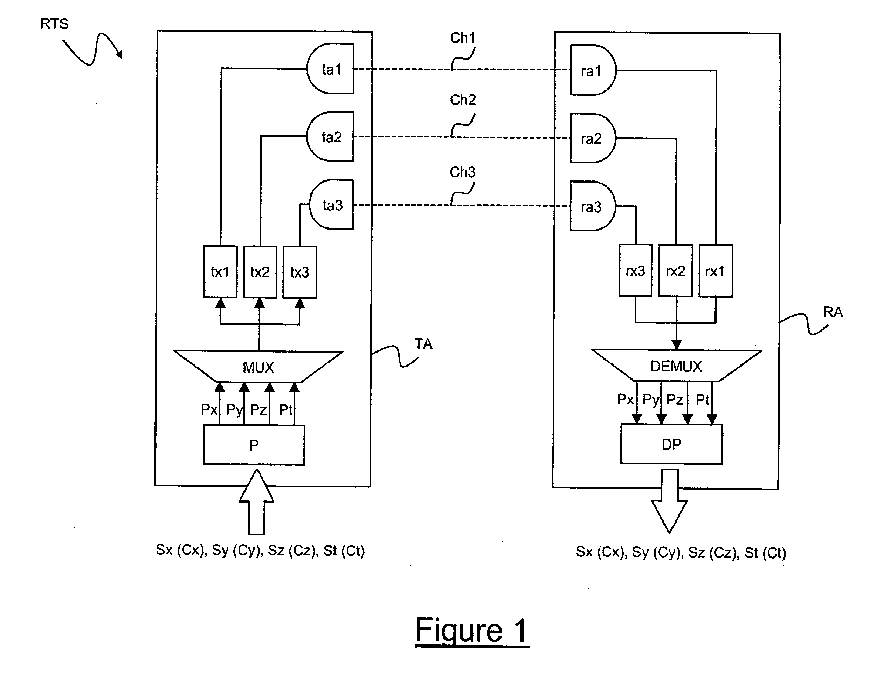

Figure 1 schematically shows a multi-channel radio transmission system RTS provided with a protection mechanism of the traffic flows according to a first embodiment of the present invention.

The radio transmission system RTS comprises a transmitting apparatus TA and a receiving apparatus RA.

For simplicity, it is assumed that the multi-channel radio transmission system RTS comprises only three radio channels, Ch1, Ch2 and Ch3, connecting the transmitting apparatus TA and the receiving apparatus RA. Obviously, this is merely exemplary, since the radio transmission system RTS can comprises any number of radio channels.

The transmitting apparatus TA preferably comprises a packetizer P, a multiplexer MUX, three transmitters tx1, tx2 and tx3, and three transmitting antennas ta1, ta2 and ta3. The receiving apparatus RA preferably comprises three receiving antennas ra1, ra2 and ra3, three receivers rx1, rx2 and rx3, a demultiplexer DEMUX, and a depacketizer DP.

Each transmitting antenna ta1, ta2 and ta3 may establish a connection with a respective receiving antenna ra1, ra2 and ra3 by means of a respective radio channel Ch1, Ch2 and Ch3, thereby forming a respective transmitter-receiver arrangement tx1-rx1, tx2-rx2 and tx3-rx3.

In the following, the operation of the radio transmission system RTS of Figure 1 will be described in detail.

It is assumed, for example, that the radio transmission system RTS of Figure 1 is used for transmitting four traffic flows corresponding to four different services Sx, Sy, Sz and St.

The packetizer P is suitable for receiving the traffic flows corresponding to the services Sx, Sy, Sz and St, dividing each traffic flow in a plurality of packets Px, Py, Pz and Pt, and outputting the plurality of packets Px, Py, Pz and Pt to the multiplexer MUX.

The multiplexer MUX multiplexes the packets Px, Py, Pz and Pt and forwards each packet to one of the transmitters tx1, tx2 and tx3. In this way, each traffic flow associated to a given service Sx, Sy, Sz and St is transmitted through one or more of the radio channels Ch1, Ch2 and Ch3.

The packets Px, Py, Pz and Pt are then received at the receiver rx1, rx2 and rx3, which forward them to the demultiplexer DEMUX. The demultiplexer DEMUX is suitable for receiving from the receivers rx1, rx2 and rx3 the plurality of packets Px, Py, Pz and Pt, and reconstituting their original sequence.

Finally, the depacketizer DP receives the packets Px, Py, Pz and Pt in their original sequence and reconstructs the original traffic flows associated to the services Sx, Sy, Sz and St.

According to this first embodiment of the present invention, each radio channel Ch1, Ch2 and Ch3 of the radio transmission system RTS can  indifferently serve as operative radio channel or protection radio channel, on the basis of the specific operative condition of the radio transmission system RTS.

In particular, in absence of failures, the three radio channels Ch1, Ch2 and Ch3 are preferably all used for transmitting the packets Px, Py, Pz and Pt. Besides, upon occurrence of a failure on one or more of the radio channels Ch1, Ch2 and Ch3, the packets are forwarded only to the remaining operative radio channel(s), as it will be described herein after in further detail.

It is assumed that each traffic flow associated to a service Sx, Sy, Sz and St has a respective capacity Cx, Cy, Cz and Ct. Further, it is assumed that the first three services Sx, Sy and Sz are provided with a protection mechanism of the respective traffic flows, whereas the fourth service St does not provide any protection mechanism of the relative traffic flow. Finally, it is assumed that each of the three radio channels Ch1, Ch2 and Ch3 has a fixed modulation and coding (such as, e.g., 4QAM), i.e. it has a fixed transmission capacity, e.g. of T bit/sec.

Preferably, the transmission capacity T is chosen so that the transmission performance of each radio channel Ch1, Ch2 and Ch3 is acceptable even when the conditions of the radio channel are not good (e.g. the loss of connection is high due to adverse atmospheric conditions). In other words, the transmission capacity T is preferably chosen so that the radio channels present a high noise immunity.

In absence of failures or degradations, the packets Px, Py, Pz and Pt are transported by using all the three radio channels Ch1, Ch2 and Ch3. Therefore, the total capacity of the radio transmission system RTS in absence of failures or degradations is equal to 3*T bit/sec. In this situation, the traffic flows associated to the four services Sx, Sy, Sz and St can be transported by the radio transmission system RTS if the sum of the capacities Cx, Cy, Cz and Ct of the traffic flows associated to the four services Sx, Sy, Sz and St is lower than or equal to the total capacity of the radio transmission system RTS, i.e.

$$Cx+Cy+Cz+Ct \leq 3{*}T \qquad \text{(Eq. 1).}$$

If a failure or degradation occurs on one of the three radio channels Ch1, Ch2 and Ch3 (e.g. the radio channel Ch3), only two radio channels (i.e. the radio channels Ch1 and Ch2) are still available for transporting the packets Px, Py, Pz and Pt. Therefore, the total capacity of the radio transmission system RTS in presence of a failure or degradation on one radio channel is equal to 2*T bit/sec.

In this situation, in order to implement the protection mechanism for the first three services Sx, Sy and Sz, the traffic flows associated to the first three services Sx, Sy and Sz must continue being transported by the radio transmission system RTS. This requires that the sum of the capacities Cx, Cy and Cz of the traffic flows associated to the services Sx, Sy and Sz is lower than or equal to the total capacity of the radio transmission system RTS, i.e.

$$Cx+Cy+Cz \leq 2{*}T \qquad \text{(Eq. 2)}$$

In this way, the transmission of the packets Px, Py and Pz associated to the protected services Sx, Sy and Sz is ensured, even if one of the radio channels of the radio transmission system RTS is subjected to a failure or degradation.

Therefore, advantageously, when degradations and/or failures are not present, the radio channels Ch1, Ch2 and Ch3 are all available for transmitting the packets Px, Py, Pz and Pt. As a result, none of the radio channels Ch1, Ch2 and Ch3 is unused, i.e. the radio resources of the radio transmission system RTS are fully exploited.

However, even if the radio transmission system RTS does not have any protection radio channel which is dedicated to the protection of the services Sx, Sy and Sz, it is anyway capable of implementing a protection mechanism for these three services. Indeed upon occurrence of a failure or degradation on one of the radio channels, the radio transmission system RTS of Figure 1 is capable of redistributing the packets associated to the three protected services on the still operating radio channels.

Therefore, advantageously, the absence of a biunique association between a traffic flow (i.e. a service) and a radio channel allows redistribution of packets, thus allowing to protect the traffic flow even when a radio channel  transporting at least part of the traffic flow undergoes a failure or degradation, without permanently reserving any protection radio channel.

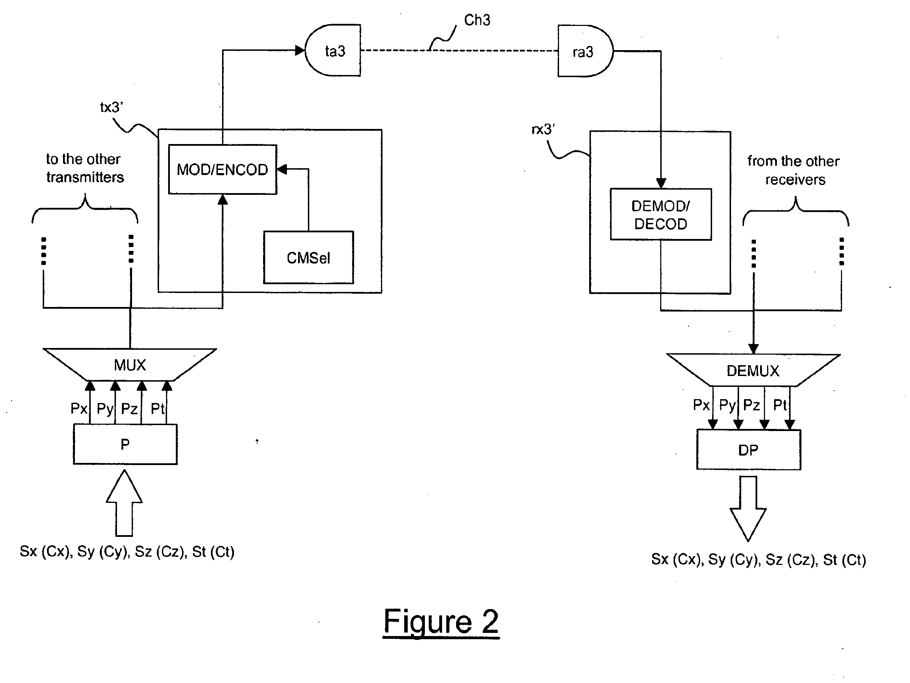

Figure 2 shows in detail the structure of a transmitter-receiver arrangement tx3'-rx3' suitable for implementing a protection mechanism of traffic flows according to a second embodiment of the present invention.

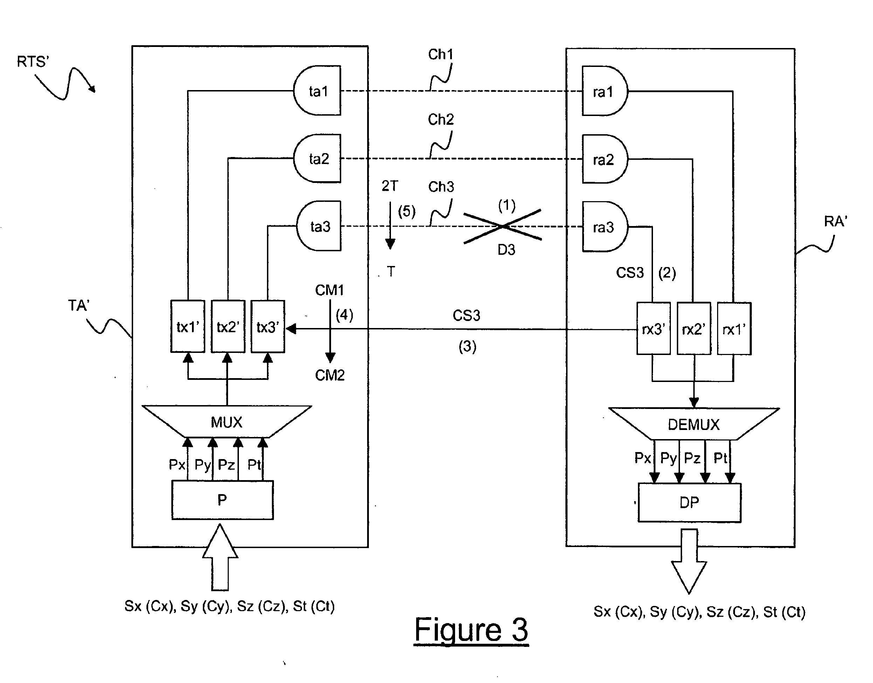

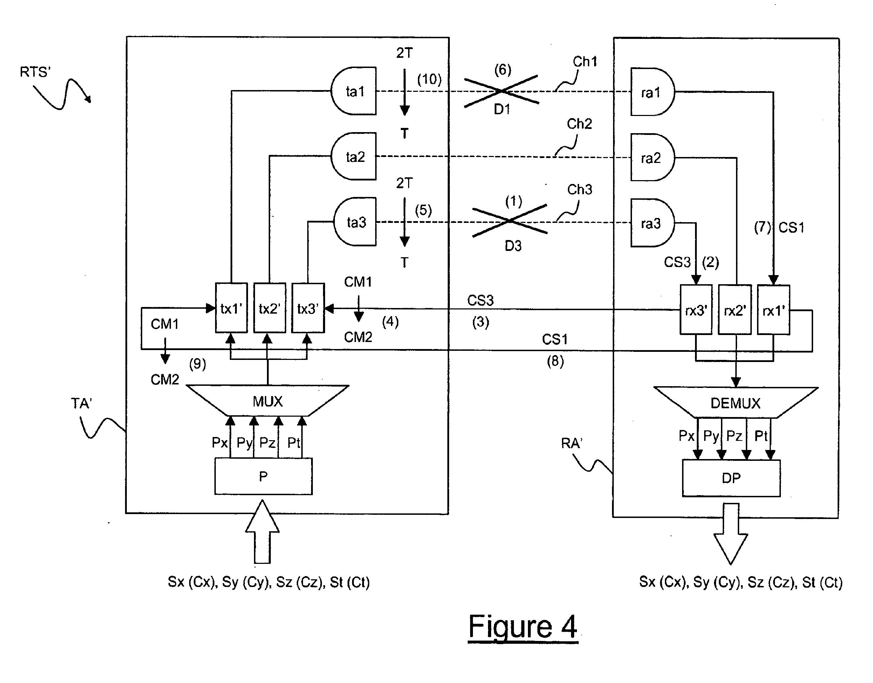

As it will be discussed in more detail herein after with reference to Figures 3 and 4, the transmitter-receiver arrangement tx3'-rx3' is part of a radio transmission system RTS' (which is shown in Figure 3) similar to that shown in Figure 1.

In particular, the receiver rx3' comprises a demodulator/decoder DEMOD/DECOD, whereas the transmitter tx3' is provided with a modulator/encoder MOD/ENCOD and a modulation and coding selector CMSel. Preferably, the modulation and coding selector CMSel is suitable for implementing an ACM technique, i.e. selecting a type of modulation and coding among a plurality of types of modulation and coding CM1, CM2, ..., CMn.

As a result, the type of modulation and coding used for transmitting packets through the radio channel Ch3 can be dynamically varied among the plurality of possible types of modulation and coding CM1, CM2, ..., CMn, as a function of the conditions of the radio channel Ch3. In this way, the transmission capacity and the immunity to noise of the radio channel Ch3 are dynamically varied according to its conditions .

For simplicity, two types of modulation and coding are considered: a first type CM1 (such as, e.g. 16-QAM), corresponding to a first transmission capacity of the radio channel of 2*T bit/sec, and a second type CM2 (such as, e.g. 4-QAM), corresponding to a second transmission capacity of the radio channel of T bit/sec. Preferably, on the radio channel Ch3, the first type CM1 is used in case the conditions of the radio channel Ch3 are good, whereas the second type CM2 is used in case the conditions of the radio channel Ch3 get worse. The second transmission capacity T corresponding to the second modulation and coding type CM2 is chosen so that the transmission performance of the radio channel Ch3 is acceptable even when the conditions of the radio channel are not good.

By referring also to Figure 3, the operation of the transmitter-receiver arrangement tx3'-rx3' will be described in more detail.

Figure 3 shows a radio transmission system RTS' according to the second embodiment of the present invention, which comprises the above transmitter-receiver arrangement tx3'-rx3'.

In particular, the radio transmission system RTS' comprises a transmitting apparatus TA', which differs from the transmitting apparatus TA of Figure 1 in that it comprises three transmitters tx1', tx2' and tx3' which may comprise ACM mechanisms, in place of the transmitters tx1, tx2 and tx3 which do not comprise such ACM) mechanisms. Preferably, the transmitter tx1' and tx2' have the same structure as the transmitter tx3' of Figure 2.

Besides, the radio transmission system RTS' comprises a receiving apparatus RA', which differs from the receiving apparatus RA of Figure 1 in that it comprises three receivers rx1', rx2' and rx3' which may comprise ACM mechanisms, in place of the receivers rx1, rx2 and rx3 which do not comprise such ACM mechanisms. Preferably, the receivers rx1' and rx2' have the same structure as the receiver rx3' of Figure 2.

It is assumed again that the radio transmission system RTS' is used to transmit the above four traffic flows corresponding to four different services Sx, Sy, Sz and St and having a respective capacity Cx, Cy, Cz and Ct. Again, it is assumed that the first three services Sx, Sy and Sz are provided with a protection mechanism of the respective traffic flows, whereas the fourth service St is provided with no protection mechanism of the corresponding traffic flow. Besides, it is assumed that the sum of the capacities Cx, Cy, Cz and Ct of the traffic flows associated to the four services Sx, Sy, Sz and St is lower than or equal to the total capacity of the radio transmission system RTS' in case the conditions of all the radio channels Ch1, Ch2, Ch3 are not good, i.e. $Cx+Cy+Cz+Ct \leq 3*T$.

In case all three radio channels Ch1, Ch2 and Ch3 are in good conditions, the first type of modulation and coding CM1 is preferably used. The total capacity of the three radio channels Ch1, Ch2 and Ch3 is then equal to 6*T bit/sec. Therefore, the sum of the capacities Cx, Cy, Cz and Ct of the traffic flows associated to the services Sx, Sy, Sz and St is lower than or equal to the total capacity of the radio transmission system RTS', i.e. $Cx+Cy+Cz+Ct \leq 6*T$. As a result, when the radio channels Ch1, Ch2 and Ch3 are in good conditions, they are certainly able to transport the packets Px, Py, Pz and Pt because it satisfies Eq. 1 above.

Still with reference to Figures 2 and 3, it is assumed that, owing to a worsening of the atmospheric conditions, a degradation D3 of the conditions of the radio channel Ch3 occurs (step (1)).

In this case, the demodulator/decoder DEMOD/DECOD of the receiver rx3' preferably receives from the receiving antenna ra3 a control signal CS3, which indicates the degradation of the radio channel Ch3 (step (2)).

The demodulator/decoder DEMOD/DECOD then preferably transmits the control signal CS3 to the modulation and coding selector CMSel of the transmitter tx3' (step (3)).

The modulation and coding selector CMSel then preferably drives the modulator/encoder MOD/ENCOD such that it switches from the first type of modulation and coding CM1 to the second type of modulation and coding CM2 (step (4)). In this way, the transmission capacity of the radio channel Ch3 decreases from 2*T bit/sec to T bit/sec (step (5)).

Then, the total capacity of the radio transmission system RTS' passes from 6*T bit/sec to 5*T bit/sec. Therefore, the sum of the capacities Cx, Cy, Cz and Ct of the traffic flows associated to the services Sx, Sy, Sz and St is still lower than or equal to the total capacity of the radio transmission system RTS', i.e. $Cx+Cy+Cz+Ct \leq 5*T$. Therefore, the packets Px, Py, Pz, and Pt can be transmitted through one or more radio of the channels Ch1, Ch2 and Ch3 because it satisfies Eq. 1 above.

For example, a first set of packets Px transporting a first part of the traffic flow associated to the services Sx can be transmitted through the radio channel Ch1 and/or the radio channel Ch2 with a transmission capacity of 2*T bit/sec. On the other hand, a second set of packets Px transporting a second part of the traffic flow associated to the services Sx can be transmitted through the radio channel Ch3 with a transmission capacity of T bit/sec.

Advantageously, the radio transmission system RTS' is then still suitable for transporting all four traffic flows by using the radio channels Ch1 and Ch2 for transmitting packets according to the first type of modulation and coding CM1, and by using the radio channel Ch3 for transmitting packets according to the second type of modulation and coding CM2.

Therefore, advantageously, owing to the use of the ACM technique, when a radio channel undergoes a degradation, it is not excluded from the radio transmission system RTS', but it is still capable of transmitting packets with a lower transmission capacity (T).

Therefore, advantageously, the absence of a biunique association between a traffic flow (i.e. a service) and a radio channel, together with the use of the ACM technique, advantageously allows to implement a protection mechanism of the traffic flow and, at the same time, to exploit the bandwidth of the radio transmission system RTS' in an even more efficient way than the system of Figure 1.

Indeed, this second embodiment of the present invention advantageously provides an amount of extra bandwidth (i.e. a bandwidth which is not used for transporting packets associated to the protected services) available with respect to the radio transmission system RTS of Figure 1. This extra bandwidth can be advantageously used, for example, for protecting packets Pt associated to the service St or for transporting possible occasional services.

Moreover, in case the radio channel Ch3 becomes completely unavailable (i.e. it undergoes a failure), the total capacity of the radio transmission system RTS' passes from 6*T bit/sec to 4*T bit/sec. Therefore, also in this situation the sum of the capacities of the traffic flows associated to the services Sx, Sy, Sz, and St is still lower than or equal to the total capacity of the radio transmission system RTS'. Therefore, advantageously, also in this case, the packets Pt corresponding to the service St are not lost, but continue to be transmitted and protected by using the extra bandwidth which is now available owing to the use of the Adaptive Modulation and Coding ACM.

With reference now to Figure 4, it is assumed that, owing to a further worsening of the atmospheric conditions, a degradation D1 on another radio channel, e.g. the radio channel Ch1, occurs (step (6)), in addition to the degradation D3 on the radio channel Ch3 (step (1)).

As mentioned above, it is assumed that the transmitter-receiver arrangement tx1'-rx1' has a structure similar to that of the transmitter-receiver arrangement tx3'-rx3' shown in Figure 2. Therefore, the receiver rx1' comprises a demodulator/decoder DEMOD/DECOD and the transmitter tx1' comprises a modulation and coding selector CMSel and a modulator/encoder MOD/ENCOD.

Also in this case, the demodulator/decoder DEMOD/DECOD of the receiver rx1' preferably receives from the antenna ra1 a control signal CS1 indicating the degradation of the radio channel Ch1 (step (7)). The demodulator/decoder DEMOD/DECOD preferably transmits the control signal CS1 to the modulation and coding selector CMSel of the transmitter tx1' (step (8)).

The modulation and coding selector CMSel preferably drives the modulator/encoder MOD/ENCOD of the transmitter tx1' such that it switches from the first type of modulation and coding CM1 to the second type of modulation and coding CM2 (step (9)). In this way, the transmission capacity of the radio channel Ch1 decreases passing from 2*T bit/sec to T bit/sec (step (10)).

The total capacity of the radio transmission system RTS' passes then from 6*T bit/sec to 4*T bit/sec. Therefore, the sum of the capacities of the traffic flows associated to the services Sx, Sy, Sz and St is still lower than or equal to the total capacity of the radio transmission system RTS'.

Therefore, also in this case, the packets Px, Py, Pz and Pt can be transmitted through one or more of the radio channels Ch1, Ch2 and Ch3. For example, a first set of packets Px transporting a first part of the traffic flow associated to the services Sx can be transmitted through the radio channel Ch2 with a capacity of 2*T bit/sec. On the other hand, a second set of packets Px transporting a second part of the traffic flow associated to the services Sx can be transmitted through the radio channels Ch1 and Ch3 with a capacity of T bit/sec.

Advantageously, the radio transmission system RTS' is then still suitable for transporting all packets Px, Py, Pz and Pt by using the radio channels Ch1 and Ch3 for transmitting packets with the second type of modulation and coding CM2 and by using the radio channel Ch3 for transmitting packets with the first type of modulation and coding CM1.

In this situation, the total transmission capacity of the radio transmission system RTS is not only high enough for transporting the packets of Px, Py, Pz associated to the protected services Sx, Sy, Sz, but it still provides also an extra bandwidth which can be advantageously used for transporting packets Pt associated to the service St. In other words, also the service St can be protected.

Finally, it is assumed that the two radio channels Ch1 and Ch3 become completely unavailable (i.e. they are both affected by failures). The total capacity of the radio transmission system RTS passes, then, from 6*T bit/sec to 2*T bit/sec. Therefore, it is still possible to implement the protection mechanism for the first three services Sx, Sy, and Sz, since the sum of the capacities Cx, Cy and Cz of the traffic flows associated to the services Sx, Sy, and Sz is still lower than or equal to the total capacity of the radio transmission system, i.e. $Cx+Cy+Cz \leq 2*T$. In this manner, the transmission of the packets Px, Py and Pz associated to the protected services Sx, Sy and Sz is ensured even if two of the radio channels of the radio transmission system RTS' are fully unavailable, because it satisfies Eq. 2 above.

Therefore, advantageously, the absence of a biunique association between a traffic flow (i.e. a service) and a radio channel, together with the ACM technique, allows to protect the traffic flow even when two radio channels transporting at least part of the traffic flow are fully unavailable.

Herein, the expression "unavailability of a radio channel" will indicate a parameter (which may be expressed e.g. in minutes/year) and indicating the duration of the periods during which the radio channel is not operative.

The unavailability is a statistical value which is estimated on the basis of a number of parameters, such as the operative characteristics of the transmission antennas and the radio channels of the radio transmission system RTS, RTS'. The unavailability is also closely related to the type of modulation and coding chosen, and thus to the transmission capacity of the radio transmission system RTS, RTS'.

More specifically, the unavailability increases as the transmission capacity of the radio transmission system RTS, RTS' increases, since the radio channels of the radio transmission system are less robust, i.e. less immune to atmospheric agents.

The above mentioned ACM technique allows to reduce the unavailability of a radio channel. Indeed, a radio channel employing a first modulation and coding type with a transmission capacity of 2*T has a given unavailability (e.g. 40 minutes/year). By applying the ACM technique, when the radio channel undergoes a degradation which would induce it to become unavailable when the first modulation and coding type is used, the radio channel may be switched to a second modulation and coding type with a lower transmission capacity, e.g. T. This second modulation and coding type has a lower unavailability (e.g. 4 minutes/year). Therefore, the total unavailability of the above radio channel is 4 minutes/year, i.e.: the radio channel will be unavailable for 4 minutes/year, while it will be available with a transmission capacity of T for 40-4=36 minutes/year, and it will be available with a transmission capacity of 2*T for the remaining time (i.e. one year except 40 minutes).

Advantageously, the application of the ACM technique to the protection mechanism of the present invention allows to reduce the overall unavailability of the radio transmission system, which is defined as the probability that the unavailability of the radio channels of a radio transmission system overlap. This is due to the fact that, as explained above, the ACM technique allows to reduce the unavailability of each single radio channel. Therefore, all the more reason, the overlapping of unavailabilities of the radio channels is reduced.

In conclusion, dividing the traffic flows associated to services into a plurality of packets, thereby eliminating a biunique association between the traffic flow and a radio channel of a radio transmission system, advantageously allows redistribution of packets on the available radio channels, thus allowing to protect the traffic flow even when a radio channel transporting a part of the traffic flow undergoes a failure.

Further advantageously, applying the ACM technique to one or more radio channels, in addition to the division of the traffic flows in packets, allows an amount of extra bandwidth to be available, which extra bandwidth may be used for protecting packets associated to a further services and/or for transporting packets associated to a further occasional service.

Further advantageously, due to the ACM technique, it is possible to reduce the unavailability period of the radio transmission system.

**Claims**

1. A method for protecting a traffic flow in a radio transmission system (RTS) having a number of radio channels (Ch1, Ch2, Ch3), wherein it comprises the following steps:

   a) dividing said traffic flow in a plurality of packets (Px, Py, Pz, Pt);
   b) transmitting said plurality of packets (Px, Py, Pz, Pt) on said number of radio channels (Ch1, Ch2, Ch3);
   c) detecting a performance worsening of at least one radio channel (Ch3) of said number of radio channels (Ch1, Ch2, Ch3);
   d) transmitting at least part of said plurality of packets (Px, Py, Pz, Pt) on remaining radio channels (Ch1, Ch2), said remaining radio channels (Ch1, Ch2) corresponding to said number of radio channels (Ch1, Ch2, Ch3) except said at least one radio channel (Ch3),

   said method being **characterized in that** it comprises the further following steps:

   c2) between said step c) and said step d), performing a switching from a first modulation and coding (CM1), said first modulation and coding (CM1) corresponding to a first transmission capacity (2T) of said at least one radio channel (Ch3), to a second modulation and coding (CM2) on said at least one radio channel (Ch3), said second modulation and coding (CM2) corresponding to a second transmission capacity (T) of said at least one radio channel (Ch3) and being such that a sum of capacities (Cx, Cy, Cz, Ct) of traffic flows is lower than or equal to a total capacity of the radio transmission system (RTS) in case of worsening of the performance of said at least one radio channel (Ch3) of said number of radio channels (Ch1, Ch2, Ch3); and

d2) during said step d), transmitting at least one packet of said plurality of packets (Px, Py, Pz, Pt) on said at least one radio channel (Ch3) by using said second modulation and coding (CM2).

2. The method according to claim 1, wherein said step c) further comprises transmitting a control signal (CS3), indicating said worsening of the performance of said at least one radio channel (Ch3), through said at least one radio channel (Ch3) which experienced the performance worsening.

3. A transmitting apparatus (TA) configured for protecting a traffic flow in a radio transmission system (RTS) having a number of radio channels (Ch1, Ch2, Ch3), the transmitting apparatus (TA) comprising:

- a packetizer (P) for dividing said traffic flow in a plurality of packets (Px, Py, Pz, Pt);
- a plurality of transmitters (tx1, tx2, tx3) configured for transmitting said plurality of packets (Px, Py, Pz, Pt) on said number of radio channels (Ch1, Ch2, Ch3);

wherein, In response to a performance worsening of at least one radio channel (Ch3) of said number of radio channels (Ch1, Ch2, Ch3), said plurality of transmitters (tx1, tx2, tx3) are configured to transmit at least part of said pluraltly of packets (Px, Py, Pz, Pt) on remaining radio channel (Ch1, Ch2), said remaining radio channels (Ch1, Ch2) corresponding to said number of radio channels (Ch1, Ch2, Ch3) except said at least one radio channel (Ch3),

said transmitting apparatus (TA) being **characterized in that** it further comprises

- a modulator/encoder (MOD/ENCOD); and
- a modulation and coding selector (CMSel) which is configured to drive said modulator/encoder (MOD/ENCOD) for switching modulation and coding of said at least one radio channel (Ch3) from a first modulation and coding (CM1) corresponding to a first transmission capacity (2T) of said at least one radio channel (Ch3), to a second modulation and coding (CM2) corresponding to a second transmission capacity (T) of said at least one radio channel (Ch3) so that a sum of capacities (Cx, Cy, Cz, Ct) of traffic flows is lower than or equal to a total capacity of the radio transmission system (RTS) in case of worsening of the performance of said at least one radio channel (Ch3) of said number of radio channels (Ch1, Ch2, Ch3),

and **in that** said plurality of transmitters (tx1, tx2, tx3) is configured for transmitting at least one packet of said plurality of packets (Px, Py, Pz, Pt) on said at least one radio channel (Ch3) by using said second modulation and coding (CM2).

4. The transmitting apparatus (TA) according to claim 3, wherein said apparatus is further configured for receiving a control signal (CS3), indicating said worsening of the performance of said at least one radio channel (Ch3).

5. A radio transmission system (RTS) comprising a transmitting apparatus (TA) according to claims 3 or 4 and a receiving apparatus (RA) cooperating with said transmitting apparatus (TA).

**Patentansprüche**

1. Verfahren zum Schutz eines Verkehrsflusses in einem Funkübertragungssystem (RTS) mit einer Anzahl von Funkkanälen (Ch1, Ch2, Ch3), die folgenden Schritte umfassend:

(a) Aufteilen des besagten Verkehrsflusses in eine Vielzahl von Paketen (Px, Py, Pz, Pt);
(b) Übertragen der besagten Vielzahl von Paketen (Px, Py, Pz, Pt) auf der besagten Anzahl von Funkkanälen (Ch1, Ch2, Ch3);
(c) Erkennen einer Leistungsverschlechterung mindestens eines Funkkanals (Ch3) der besagten Anzahl von Funkkanälen (Ch1, Ch2, Ch3);
(d) Übertragen zumindest eines Teils der besagten Vielzahl von Paketen (Px, Py, Pz, Pt) auf den restlichen Funkkanälen (Ch1, Ch2), wobei die besagten restlichen Funkkanäle (Ch1, Ch2) der besagten Anzahl von Funkkanälen (Ch1, Ch2, Ch3) mit Ausnahme des besagten mindestens einen Funkkanals (Ch3) entsprechen,

wobei das Verfahren **dadurch gekennzeichnet Ist, dass** es die weiteren folgenden Schritte umfasst:

c2) zwischen dem besagten Schritt c) und dem besagten Schritt d): Umschalten von einer ersten Modulation und Codierung (CM1), wobei die besagte erste Modulation und Codierung (CM1) einer ersten Übertragungskapazität (2T) des besagten mindestens einen Funkkanals (Ch3) entspricht, zu einer zweiten Modulation und Codierung (CM2) auf dem besagten mindestens einen Funkkanal (Ch3), wobei die besagte zweite Modulation und Codierung (CM2) einer zweiten Übertragungskapazität (T) des besagten mindestens einen Funkkanals (Ch3) entspricht und derart erfolgt, dass eine Summe der Kapazitäten (Cx, Cy, Cz, Ct) von Verkehrsflüssen im Fall der Verschlechterung der Leistung des besagten mindestens einen Funkkanals (Ch3) der besagten Anzahl von Funkkanälen (Ch1, Ch2, Ch3) niedriger als eine oder gleich einer Gesamtkapazität des Funkübertragungssystem (RTS) ist; und

d2) während des Durchführens von Schritt d), Übertragen von mindestens einem Paket der besagten Vielzahl von Paketen (Px, Py, Pz, Pt) auf dem besagten mindestens einen Funkkanal (Ch3) unter Verwendung der besagten zweiten Modulation und Codierung (CM2).

2. Verfahren nach Anspruch 1, wobei der besagte Schritt c) weiterhin das Übertragen eines Steuersignals (CS3), welches eine Verschlechterung der Leistung des besagten mindestens einen Funkkanals (Ch3) anzeigt, über den besagten mindestens einen Funkkanal (Ch3), auf welchem die Leistungsverschlechterung aufgetreten ist, umfasst.

3. Übertragungsvorrichtung (TA), konfiguriert für den Schutz eines Verkehrsflusses in einem Funkübertragungssystem (RTS) mit einer Anzahl von Funkkanälen (Ch1, Ch2, Ch3), wobei die Übertragungsvorrichtung (TA) umfasst:

- Einen Paketierer (P) zum Aufteilen des besagten Verkehrsflusses in eine Vielzahl von Paketen (Px, Py, Pz, Pt);
- Eine Vielzahl von Sendern (tx1, tx2, tx3), welche für die Übertragung der besagten Vielzahl von Paketen (Px, Py, Pz, Pt) auf der besagten Anzahl von Funkkanälen (Ch1, Ch2, Ch3) konfiguriert sind;
wobei, in Reaktion auf eine Leistungsverschlechterung mindestens eines Funkkanals (Ch3) der besagten Anzahl von Funkkanälen (Ch1, Ch2, Ch3), die besagte Vielzahl von Sendern (tx1, tx2, tx3) für die Übertragung zumindest eines Teils der besagten Vielzahl von Paketen (Px, Py, Pz, Pt) auf den restlichen Funkkanälen (Ch1, Ch2) konfiguriert sind, wobei die besagten restlichen Funkkanäle (Ch1, Ch2) der Anzahl von Funkkanälen (Ch1, Ch2, Ch3) mit Ausnahme des besagten mindestens einen Funkkanals (Ch3) entsprechen,
wobei die besagte Übertragungsvorrichtung (TA) **dadurch gekennzeichnet ist, dass** sie weiterhin umfasst:
- Einen Modulator/Codierer (MOD/ENCOD); und
- eine Modulations- und Codierungs-Auswahlvorrichtung (CMSel), welche dafür konfiguriert ist, den besagten Modulator/Codierer (MOD/ENCOD) anzutreiben, um die Modulation und Codierung des besagten mindestens einen Funkkanals (Ch3) von einer ersten Modulation und Codierung (CM1), welche einer ersten Übertragungskapazität (2T) des besagten mindestens einen Funkkanals (Ch3) entspricht, zu einer zweiten Übertragungskapazität (T) des besagten mindestens einen Funkkanals (Ch3) umzuschalten, so dass eine Summe der Kapazitäten (Cx, Cy, Cz, Ct) der Verkehrsflüsse im Fall einer Verschlechterung der Leistung des besagten mindestens einen Funkkanals (Ch3) der besagten Anzahl von Funkkanälen (Ch1, Ch2, Ch3) niedriger als eine oder gleich einer Gesamtkapazität des Funkübertragungssystems (RTS) ist,
und dass die besagte Vielzahl von Sendern (tx1, tx2, tx3) für die Übertragung von mindestens einem Paket der besagten Vielzahl von Paketen (Px, Py, Pz, Pt) auf dem besagten mindestens einen Funkkanal (Ch3) unter Verwendung der besagten zweiten Modulation und Codierung (CM2) konfiguriert sind.

4. Übertragungsvorrichtung (TA) nach Anspruch 3, wobei die besagte Vorrichtung weiterhin für den Empfang eines Steuersignals (CS3), welches die besagte Verschlechterung der Leistung des besagten mindestens einen Funkkanals (Ch3) konfiguriert ist.

5. Funkübertragungssystem (RTS) mit einer Übertragungsvorrichtung (TA) gemäß den Ansprüchen 3 oder 4, und einer Empfangsvorrichtung (RA), welche mit der besagten Übertragungsvorrichtung (TA) zusammenwirkt.

**Revendications**

1. Procédé de protection d'un flux de trafic dans un système de transmission radio (RTS) présentant plusieurs canaux radio (Ch1, Ch2, Ch3), comprenant les étapes suivantes :

a) diviser ledit flux de trafic en une pluralité de paquets (Px, Py, Pz, Pt) ;
b) transmettre ladite pluralité de paquets (Px, Py, Pz, Pt) sur lesdits plusieurs canaux radio (Ch1, Ch2, Ch3) ;
c) détecter une détérioration des performances d'au moins un canal radio (Ch3) parmi lesdits plusieurs canaux radio (Ch1, Ch2, Ch3) ;

d) transmettre au moins une partie de ladite pluralité de paquets (Px, Py, Pz, Pt) sur les canaux radio restants (Ch1, Ch2), lesdits canaux radio restants (Ch1, Ch2) correspondant auxdits plusieurs canaux radio (Ch1, Ch2, Ch3) à l'exception dudit au moins un canal radio (Ch3),

ledit procédé étant **caractérisé en ce qu'**il comprend les étapes supplémentaires suivantes :

c2) entre ladite étape c) et ladite étape d), exécuter une commutation entre des premiers codage et modulation (CM1), lesdits premiers codage et modulation (CM1) correspondant à une première capacité de transmission (2T) dudit au moins un canal radio (Ch3), et des deuxièmes codage et modulation (CM2) sur ledit au moins un canal radio (Ch3), lesdits deuxièmes codage et modulation (CM2) correspondant à une deuxième capacité de transmission (T) dudit au moins un canal radio (Ch3) et étant tels qu'une somme de capacités (Cx, Cy, Cz, Ct) de flux de trafic est inférieure ou égale à une capacité totale du système de transmission radio (RTS) en cas de détérioration des performances dudit au moins un canal radio (Ch3) parmi lesdits plusieurs canaux radio (Ch1, Ch2, Ch3) ; et

d2) durant ladite étape d), transmettre au moins un paquet parmi ladite pluralité de paquets (Px, Py, Pz, Pt) sur ledit au moins un canal radio (Ch3) en utilisant lesdits deuxièmes codage et modulation (CM2).

2. Procédé selon la revendication 1, dans lequel ladite étape c) comprend en outre la transmission d'un signal de commande (CS3), indiquant ladite détérioration des performances dudit au moins un canal radio (Ch3), à travers ledit au moins un canal radio (Ch3) qui a subi la détérioration des performances.

3. Appareil de transmission (TA) configuré pour protéger un flux de trafic dans un système de transmission radio (RTS) présentant plusieurs canaux radio (Ch1, Ch2, Ch3), l'appareil de transmission (TA) comprenant :

- un dispositif de mise en paquets (P) pour diviser ledit flux de trafic en une pluralité de paquets (Px, Py, Pz, Pt) ;
- une pluralité d'émetteurs (tx1, tx2, tx3) configurés pour transmettre ladite pluralité de paquets (Px, Py, Pz, Pt) sur lesdits plusieurs canaux radio (Ch1, Ch2, Ch3) ;

dans lequel, en réponse à une détérioration des performances d'au moins un canal radio (Ch3) parmi lesdits plusieurs canaux radio (Ch1, Ch2, Ch3), ladite pluralité d'émetteurs (tx1, tx2, tx3) sont configurés pour transmettre au moins une partie de ladite pluralité de paquets (Px, Py, Pz, Pt) sur les canaux radio restants (Ch1, Ch2), lesdits canaux radio restants (Ch1, Ch2) correspondant auxdits plusieurs canaux radio (Ch1, Ch2, Ch3) à l'exception dudit au moins un canal radio (Ch3),

ledit appareil de transmission (TA) étant **caractérisé en ce qu'**il comprend en outre

- un modulateur/codeur (MOD/ENCOD) ; et
- un sélecteur de modulation et de codage (CMSel) qui est configuré pour entraîner ledit modulateur/codeur (MOD/ENCOD) à commuter la modulation et le codage dudit au moins un canal radio (Ch3) entre des premiers codage et modulation (CM1) correspondant à une première capacité de transmission (2T) dudit au moins un canal radio (Ch3), et des deuxièmes codage et modulation (CM2) correspondant à une deuxième capacité de transmission (T) dudit au moins un canal radio (Ch3) de sorte qu'une somme de capacités (Cx, Cy, Cz, Ct) de flux de trafic soit inférieure ou égale à une capacité totale du système de transmission radio (RTS) en cas de détérioration des performances dudit au moins un canal radio (Ch3) parmi lesdits plusieurs canaux radio (Ch1, Ch2, Ch3),

et **en ce que** ladite pluralité d'émetteurs (tx1, tx2, tx3) sont configurés pour transmettre au moins un paquet parmi ladite pluralité de paquets (Px, Py, Pz, Pt) sur ledit au moins un canal radio (Ch3) en utilisant lesdits deuxièmes codage et modulation (CM2).

4. Appareil de transmission (TA) selon la revendication 3, dans lequel ledit appareil est en outre configuré pour recevoir un signal de commande (CS3), indiquant ladite détérioration des performances dudit au moins un canal radio (Ch3).

5. Système de transmission radio (RTS) comprenant un appareil de transmission (TA) selon la revendication 3 ou 4 et un appareil de réception (RA) coopérant avec ledit appareil de transmission (TA).

EP 2 159 945 B1

Figure 1

Figure 2

EP 2 159 945 B1

Figure 3

Figure 4

**EP 2 159 945 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020072330 A